Europäisches Patentamt

European Patent Office

Office européen des brevets

(19)

(11) Veröffentlichungsnummer: **0 007 974**
**B1**

(12) EUROPÄISCHE PATENTSCHRIFT

(45) Veröffentlichungstag der Patentschrift: 08.04.81

(21) Anmeldenummer: 79101441.8

(22) Anmeldetag: 11.05.79

(51) Int. Cl.³: **B 60 N 3/00, B 60 N 1/00**

(54) Garnitur für Fahrzeuge.

(30) Priorität: 10.08.78 DE 2834955

(43) Veröffentlichungstag der Anmeldung:
20.02.80 Patentblatt 80/4

(45) Bekanntmachung des Hinweises auf die Patenterteilung:
08.04.81 Patentblatt 81/14

(84) Benannte Vertragsstaaten:
BE DE FR GB IT SE

(56) Entgegenhaltungen:
DE - U - 7 706 534
DE - U - 7 721 687
US - A - 3 041 107

(73) Patentinhaber: Gebr. Happich GmbH
Postfach 10 02 49 Clausenbrücke 1
D-5600 Wuppertal 1 (DE)

(72) Erfinder: Jäckel, Helmut,
An der Maikammer 26
D-5620 Velbert 15 (DE)
Erfinder: Ross, Paul
Steinbeck 45
D-5600 Wuppertal 1 (DE)

Garnitur für Fahrzeuge

Die Erfindung betrifft eine Garnitur für Fahrzeuge, insbesondere zur Anordnung an Rückenlehnen von Fahrzeugsitzen, die aus Halteelementen zum Festhalten und zur Aufnahme von Gerätschaften und aus einem Aschergehäuse mit einem darin eingesetzten Ascher besteht.

An den Rückenlehnen von Fahrzeugsitzen, z.B. in Reisebussen, Flugzeugen oder Schiffen, sind oftmals eine Vielzahl von Ausrüstungsteilen angeordnet, die der Sicherheit und dem Komfort der Reisegäste dienen. Bei diesen Ausrüstungsteilen handelt es sich im allgemeinen um Haltegriffe, Ascher, Garderobehaken, Aufnahmeelemente für kleine Gepäckstücke oder sonstige Gerätschaften, wie Getränkehalter, und um kleine Tische, die meist klappbar an den Rückenlehnen der Fahrzeugsitze gelagert sind. Diese Ausrüstungsteile werden praktisch ausschließlich einzeln hergestellt und auch einzeln montiert und bilden daher einen beträchtlichen Kostenfaktor und zum Teil auch eine Gefahrenquelle, weil sich Fahrgäste, zum Beispiel bei einem Aufprall auf einen Garderobehaken, empfindlich verletzen können.

Durch das DE—GM 77 06 534 ist es zwar bekannt, an der Rückwand der Rückenlehne eines Fahrzeugsitzes eine aus dem Gehäuse mit Haltegriff und Ascher bestehende Einbaueinheit vorzusehen, jedoch muß hierfür der Fahrzeugsitz durch Einarbeitung einer entsprechenden Ausnehmung in der Rückewand besonders präpariert werden und ferner muß auch diese bekannte Einbaueinheit aus separat gefertigten Teilen zusammengesetzt werden.

Weiterhin ist in der DE—U— 77 21 687 ein am Rückenteil eines Reihen-Fahrgastsitzes montierter Griff zum Festhalten für den auf dem nachfolgenden Sitz sitzenden Fahrgast beschrieben, der sich auszeichnet durch ein etwa 10 cm breites, die gesamte Breite des Rückenteiles überspannendes schwach nachgiebiges, vollkommen mit schwach elastischem Kunststoffschaum umspritztes Griffband, das endseitig zum Rückenteil hin abgebogen und dort befestigbar ist. Der bekannte Griff kann auch als Geräteträger und Ablage benutzt werden, was jedoch die separate Herstellung und Anbringung eines Ablagebleches voraussetzt. Schließlich zeigt die US—A— 3 041 107 ein an dem Rückenteil eines Sitzes zu befestigendes Bauteil mit mehreren senkrecht ausgerichteten Stecköffnungen, welche zur Aufnahme eines Aschenbechers und von Trinkbechern od. dgl. dienen.

Der Erfindung liegt die Aufgabe zugrunde, eine verschiedene Funktionen erfüllende Garnitur zu schaffen, welche bisher jeweils einzeln herzustellende und zu montierende Teile in sich vereinigt, einfach, materialsparend und kostengünstig herzustellen und zu montieren ist und auch den ästhetischen Anforderungen vollauf genügt.

Zur Lösung dieser Aufgabe sind erfindungsgemäß die im kennzeichnenden Teil des Patentanspruchs 1 angegebenen Maßahmen vorgesehen. Zweckmäßige Weiterbildungen und Ausgestaltungen der Erfindung sind in den Ansprüchen 2 bis 5 gekennzeichnet.

Bei der erfindungsgemäßen Garnitur ist eine Vereinigung einer Vielzahl von sonst üblichen Einzelteilen gegeben. So besitzt die Garnitur einen Haltegriff mit integriertem Aschergehäuse und darin eingesetztem Ascher. Fernerhin ist die Garnitur mit vorzugsweise verdeckt angeordneten hakenförmigen Ansätzen versehen, die als Kleiderhaken oder zum Aufhängen von kleinem Handgepäck benutzt werden können. Besonders erwähnenswert ist die erfindungsgemäß als Stecköffnung vorgesehene Ausbildung der Aufnahmeelemente, weil sich hierdurch der Vorteil ergibt, mit Aufhängehaken ausgebildete Gerätschaften besonders schnell und einfach zu haltern. Bei den Gerärtschaften kann es sich beispielsweise um solche handeln, die zur Aufnahme von Getränkebehältern oder Trinkgefäßen ausgebildet sind. Insbesondere können aber auch mit Aufhängehaken versehene kleine Tischplatten oder Tabletts, zum Beispiel während der Verpflegungszeiten der Fahrgäste, gehaltert werden, wozu nur ein Einstecken der Aufhängehaken in die Stecköffnungen erforderlich ist. Durch die einstückige Ausbildung als Kunststoffspritzgußteil können Herstellungsformen und beträchtliche Montagezeiten eingespart werden. Für die erfindungsgemäße Garnitur ergeben sich nur wenige Befestigungsstellen, beispielsweise Anschraubpositionen, mit entsprechend geringem Montageaufwand. Es ergibt sich für die erfindungsgemäße Garnitur insbesondere auch eine zweckmäßige und ein angenehmes Erscheinungsbild vermittelnde Gestaltung, denn vorzugsweise ist die Garnitur symmetrisch ausgebildet.

Im folgenden wird der Gegenstand Erfindung anhand der Zeichnung, die zwei Ausführungsbeispiele zeigt, näher erläutert. Es zeigen

Fig. 1 ein erstes Ausführungsbeispiel der Garnitur in Vorderansicht,

Fig. 2 eine Ansicht, folgend der Linie II — II in Fig. 1
und

Fig. 3 eine Vorderansicht eines zweiten Ausführungsbeispiels.

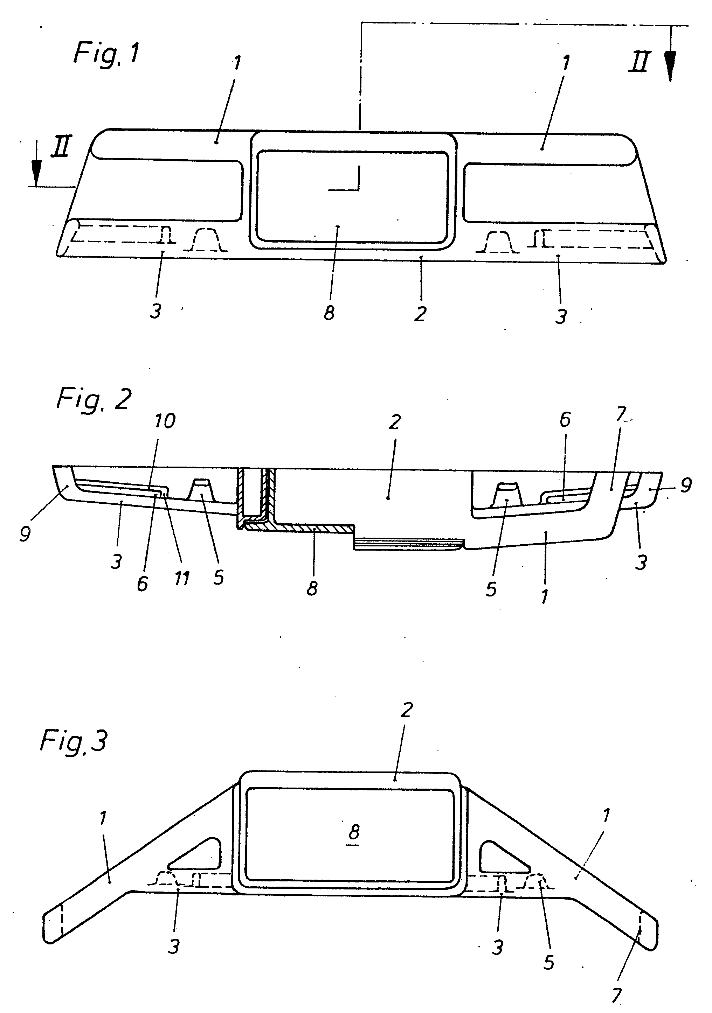

Die Garnitur nach Fig. 1 und 2 ist eine aus verschiedenen Funktionsteilen bestehende, einstückig ausgebildete Baueinheit. Sie umfaßt einen in zwei Griffkörper 1 unterteilten Haltegriff, ein dazwischen angeordnetes Aschergehäuse 2 sowie zwei Streben 3, die mit Aufnahmeelementen ausgebildet sind, welche aus hakenförmigen Ansätzen 5 und Stecköffnungen 6 bestehen. Wie Fig. 1 zeigt, kann das Ausrüstungsteil zweckmäßigerweise H-förmig gestaltet und in Einbaulage liegend angeordnet sein.

Die Griffkörper 1 sind nach Fig. 1 und 2 beidseitig an den oberen Eckbereichen des Aschergehäuses 2 angeformt und weisen abgewinkelte Endstücke 7 auf, deren freie Enden an der Anlagefläche, was im allgemeinen die Rückenlehne eines Fahrzeugsitzes ist, zur Anlage kommen. Die Endstücke 7 weisen nicht dargestellte Lageransätze und/oder durch Stopfen oder Abdeckkappen verschließbare Durchlaßöffnungen, die ebenfalls nicht dargestellt sind, für Befestigungselemente auf. Die Länge und der Querschnitt der Griffkörper 1 sind selbstverständlich so bemessen, daß die Griffkörper 1 bequem umgriffen werden können.

Das Aschergehäuse 2 besitzt eine etwa rechteckige kastenförmige Ausbildung und ist insbesondere zur Aufnahme eines üblichen Kippaschers 8 gestaltet.

An den unteren seitlichen Eckbereichen des Aschergehäuses 2 sind (vergleiche Fig. 2) etwa parallel zu den Griffkörpern 1 verlaufend die Streben 3 angeformt, welche, wie die Griffkörper 1, abgewinkelte Endstücke 9 aufweisen. An der der Anlagefläche zugewandten Rückseite weist jede Strebe 3 einen angeformten hakenförmigen Ansatz 5 auf, der als Kleiderhaken oder dergleichen benutzt werden kann. Ferner ist an der Rückseite jeder Strebe 3 eine Lasche 10 angeformt, die mit ihrem einen abgewinkelten Ende 11 in die Strebe 3 und mit ihrem anderen Ende in das Endstück 9 übergeht. Die dadurch gebildeten Stecköffnungen 6 dienen zur Aufnahme von mit Aufhängehaken versehenen Gerätschaften.

Das Ausrüstungsteil ist bis auf den separat zu fertigenden Ascher 8 vorzugsweise einstückig und als Kunststoffspritzgußteil gefertigt.

Bei dem Ausführungsbeispiel nach Fig. 3 besitzt die Garnitur eine etwa kegelstumpfförmige Gestaltung. Die Griffkörper 1 sind in einem stumpfen Winkel zur Oberkante des Aschergehäuses 2 angeordnet und mit ihren Enden jeweils nach unten geneigt. Dagegen ist die Ausrichtung der Streben 3 in Einbaulage etwa waagerecht und sie sind mit einem Ende jeweils an das Aschergehäuse 2 und mit dem anderen Ende jeweils an einen Griffkörper 1 angeformt. Die hakenförmigen Ansätze 5 und die Stecköffnungen 6 können beim Ausführungsbeispiel nach Fig. 3 in gleicher Weise, wie anhand der Fig. 1 und 2 beschrieben, an den Streben 3 angeordnet sein.

Die Erfindung ist selbstverständlich nicht auf die dargestellten Ausführungsbeispiele beschränkt. Für die Erfindung ist es insbesondere wesentlich, daß eine Vielzahl von Funtionselementen so zu einer Garnitur zusammengefaßt ist, daß sich der besondere Vorteil einer einstückigen Ausbildung, einer zweckmäßigen Aufteilung der Funktionselemente zueinander und eine schnell und einfach durchzuführende Montage realisieren läßt.

## Patentansprüche

1. Garnitur für Fahrzeuge, insbesondere zur Anordnung an der Rückenlehnenrückwand eines Fahrzeugsitzes, die aus Halteelementen zum Festhalten und zur Aufnahme von Gerätschaften und aus einem Aschergehäuse (2) für einen darin einzusetzenden Ascher (8) besteht, dadurch gekennzeichnet, daß die Garnitur als einstückiges Kunststoffspritzgußteil ausgebildet ist, welches einen Haltegriff, ein Aschergehäuse (2), zumindest einen Kleiderhaken und zwei in Einbaulage senkrecht ausgerichtete Stecköffnungen (6) umfaßt, daß der Haltegriff aus zwei Griffkörpern (1) besteht, die links und rechts von dem seitlichen Bereich des Aschergehäuses (2) ausgehen und zur Anlagefläche hin abgewinkelte Endstücke (7) aufweisen, daß die Stecköffnungen (6) in Streben (3) angeordnet sind, die unterhalb der Griffkörper (1) ebenfalls links und rechts von dem seitlichen Bereich des Aschergehäuses (2) ausgehen und daß de Kleiderhaken hakenförmige Ansätze (5) sind, von denen jede Strebe (3) zumindest einen an der der Anlagefläche zugewandten Strebenrückseite besitzt.

2. Garnitur nach Patentanspruch 1, dadurch gekennzeichnet, daß die Streben (3) zur Anlagefläche hin abgewinkelte Endstücke (9) aufweisen.

3. Garnitur nach Patentanspruch 1, dadurch gekennzeichnet, daß die Streben (3) einendig an dem Aschergehäuse (2) angeordnet sind und anderendig jeweils in einen Griffkörper (1) übergehen.

4. Garnitur nach einem der Patentansprüche 1 bis 3, dadurch gekennzeichnet, daß die Endstücke (7, 9) der Griffkörper (1) und Streben (3) Lageransätze und/oder durch Stopfen oder Abdeckkappen verschließbare Durchlaßöffnungen für Befestigungselemente aufweisen.

5. Garnitur nach einem der Patentansprüche 1 bis 4, dadurch gekennzeichnet, daß jede Strebe (3) an der Rückseite eine angeformte Lasche (10) aufweist, die mit ihrem einen abgewinkelten Ende (11) kurz neben dem hakenförmigen Ansatz (5) in die Rückseite der Strebe (3) und mit ihrem anderen Ende in das Endstück (9) übergeht und eine Stecköffnung (6) bildet, welche kopf- und bodenfrei ist und sich parallel zur Strebe (3) erstreckt.

## Claims

1. A unit for a vehicle, particularly for mounting on the rear wall of a back-rest of a vehicle seat, which unit comprises retaining elements for securing and receiving utensils and an ash-tray housing (2) for an ash-tray (8) to be inserted therein, characterized in that the unit is a one-piece plastics injection moulding comprising grip means, the ash-tray housing (2), at least one clothes hook and two openings (6) which extend vertically in the fitted position, in that the grip means comprise two grip members (1) which extend laterally from the left and the right sides respectively of the ash-tray housing (2) and are provided with end-pieces (7) angled towards the mounting surface, in that the openings (6) are arranged on webs (3) which likewise extend, below the grip members (1), laterally from the left and the right sides of the ash-tray housing (2), and in that each clothes hook is a hook-shaped projection (5), and in that each web (3) is provided with at least one projection extending from the web's rear face facing the mounting surface.

2. A unit according to claim 1, characterized in that the webs (3) have end-pieces (9) angled towards the mounting surface.

3. A unit according to claim 1, characterised in that the webs (3) terminate at one end on the ash-tray housing (2) and merge at their other end with a respective grip member (1).

4. A unit according to any one of claims 1 to 3, characterized in that the end pieces (7, 9) of the grip members (1) and the webs (3) have mounting shoulders and/or through-apertures for receiving securing elements, which apertures are closable by plugs or caps.

5. A unit according to any one of claims 1 to 4, characterised in that the rear face of each web (3) is provided with an integral strip portion (10), which at its one, angled end (11), merges with the rear face of the web (3) at a point close to the hook-shaped projection (5), and at its other end merges with the end piece (9), said strip portion forming the opening (6) which is open at its top and bottom and extends parallel with the web (3).

**Revendications**

1. Garniture pour véhicules, notamment à disposer sur la face arrière des dossiers d'un siège de véhicule, qui consiste en des éléments de retenue devant maintenir et recevoir des accessoires et en un boîtier de cendrier (2) pour cendrier (8) à y insérer, caractérisée en ce que la garniture est réalisée sous la forme d'une pièce plastique moulée par injection d'un seul tenant, comprenant une poignée, un boîtier (2) de cendrier, au moins un crochet à vêtements et deux ouvertures d'enfichage (6) dirigées verticalement en position de montage, en ce que la poignée comprend deux corps de prise (1) qui partent à gauche et à droite de la zone latérale du boîtier (2) du cendrier et comportent des bouts (7) coudés vers la surface d'appui, en ce que les ouvertures d'enfichage (6) sont pratiquées dans des jambes (3) qui partent également, sous les corps de prise (1), à gauche et à droite de la zone latérale du boîtier (2) du cendrier, et en ce que les crochets à vêtements sont des appendices (5) en forme de crochet, chaque jambe (3) en comportant au moins un sur las face postérieure tournée vers la surface d'appui.

2. Garniture selon la revendication 1, caractérisée en ce que les jambes (3) comportent de bouts (9) coudés vers la surface d'appui.

3. Garniture selon la revendication 1, caractérisée en ce que les jambes (3) sont disposées, à une extrémité, contre le boîtier (2) du cendrier et se raccordent chacune, à l'autre extrémité, à un corps de prise (1).

4. Garniture selon l'une quelconque des revendications 1 à 3, caractérisée en ce que les bouts (7, 9) des corps de prise (1) et des jambes (3) comportent des appendices d'appui et/ou des ouvertures de passage pouvant être obturées par des bouchons ou des chapeaux de recouvrement pour des éléments de fixation.

5. Garniture selon l'une quelconque des revendications 1 à 4, caractérisée en ce que chaque jambe (3) comporte une patte (10) formée sur sa face postérieure, qui se raccorde par l'une de ses extrémités (11) coudée très près de l'appendice en forme de crochet (5) à la face postérieure de la jambe (3), et, par son autre extrémité, au bout (9), et forme une ouverture d'enfichage (6) sans couverture ni fond et s'éterndant parallèlement à la jambe (3).

Fig. 1

Fig. 2

Fig. 3